# EUROPÄISCHE PATENTSCHRIFT

(11) **EP 2 537 326 B1**
(45) Veröffentlichungstag und Bekanntmachung des Hinweises auf die Patenterteilung: **08.01.2020**
(21) Anmeldenummer: 11704924.7
(22) Anmeldetag: 28.01.2011
(51) Int. Cl.: H04M 3/42, H04L 12/24, H04L 29/08

(54) **VERFAHREN ZUM VERWALTEN VON DATEN IN EINEM KOMMUNIKATIONSNETZ**
METHOD FOR MANAGING DATA IN A COMMUNICATION NETWORK
PROCÉDÉ POUR GÉRER DES DONNÉES DANS UN RÉSEAU DE COMMUNICATION

(30) Priorität: 17.02.2010 DE 102010008300
(43) Veröffentlichungstag der Anmeldung: 26.12.2012
(73) Patentinhaber: Unify GmbH & Co. KG, 80807 München (DE)
(72) Erfinder: BOZIONEK, Bruno, 33178 Borchen (DE); KLAGHOFER, Karl, 81373 München (DE); PRANGE, Holger, 81373 München (DE); TIETSCH, Michael, 86916 Kaufering (DE)
(74) Vertreter: Fritzsche, Thomas
(86) Internationale Anmeldenummer: PCT/EP2011/000407
(87) Internationale Veröffentlichungsnummer: WO 2011/101084

(56) Entgegenhaltungen:
- Anonymous: "TIA Standard - IP Telephony Infrastructure - Link Layer Discovery Protocol for Media Endpoint Devices", TIA Standard, 6. April 2006 (2006-04-06), Seiten 5FP,I--VIII,1-120, XP002630947, Gefunden im Internet: URL:http://www.tiaonline.org/standards/tec hnology/voip/documents/ANSI-TIA-1057_final _for_publication.pdf [gefunden am 2011-03-31]
- Anonymous: "Foundry Networks weist volle Interoperabilität mit den Protokollen LLDP und LLDP-MED nach", Foundry Networks - Pressemitteilung, 24. Oktober 2007 (2007-10-24), Seiten 1-3, XP002630977, Gefunden im Internet: URL:http://www.openpr.de/pdf/166468/Foundr y-Networks-weist-volle-Interoperabilitaet- mit-den-Protokollen-LLDP-und-LLDP-MED-nach .pdf [gefunden am 2011-04-01]

## Beschreibung

Die Erfindung betrifft ein Verfahren zum Verwalten von Daten in einem Kommunikationsnetz nach dem Oberbegriff des Anspruchs 1.

In dem vom IEEE (***I**nstitute of **E**lectrical and **E**lectronical **E**ngineering*) verabschiedeten Standard IEEE 802.1AB wird das *LLDP*-(***L**ink **L**ayer **D**iscovery **P**rotocol*)-Protokoll spezifiziert.

Das LLDP-MED-(LLDP - ***M**edia **E**ndpoint **D**iscovery*)-Protokoll stellt eine Erweiterung des LLDP-Protokolls dar, das die Erkennung des Endgerätestandorts erlaubt, und so - etwa im Falle von VoiP(***V**oice **o**ver **IP***) - ermöglicht, Notrufe einzuleiten.

Um einen solchen Notrufdienst (in der englischen Literatur mit *"**E**mergency **C**all **S**ervice,* ECS" bezeichnet) oder andere standortabhängige Dienste im betreffenden Kommunikationsnetz anbieten zu können, ist es erforderlich, im Rahmen eines Datenadministrationsvorgangs Ortsinformationen, die den Standort der einzelnen Endgeräte betreffen, in eine im IEEE 802.1AB-Standard spezifizierte Verwaltungs-Informations-Basiseinheit (in der englischen Literatur mit *"**M**anagement **I**nformation **B**ase",* MIB) einzuschreiben und darin vorzuhalten, bis sie im Bedarfsfall von der Verwaltungs-Informations-Basiseinheit abgerufen werden.

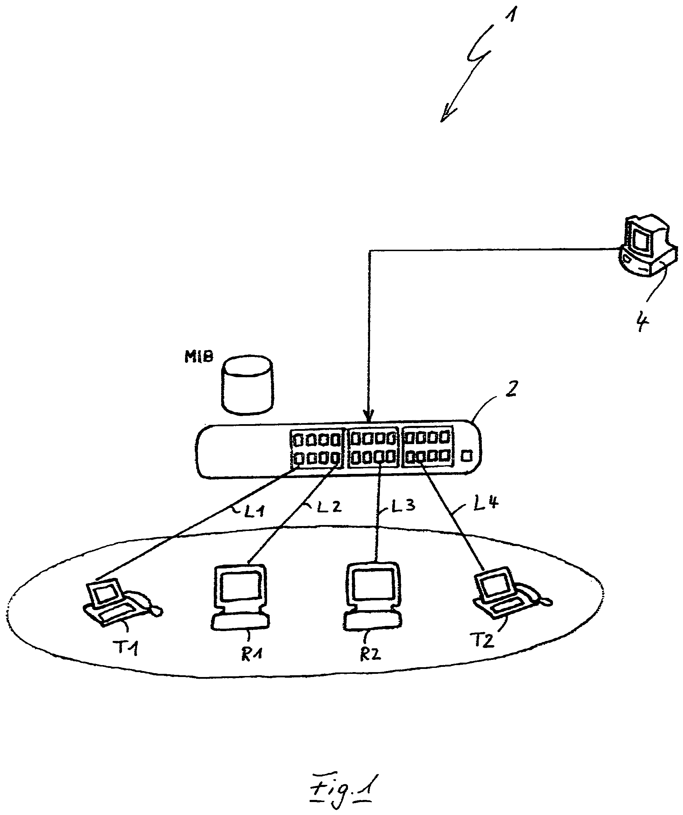

**Fig. 1** zeigt ein schematisches Systemschaubild des prinzipiellen Aufbaus eines fertig installierten ersten Telekommunikationsnetzes 1 zur Veranschaulichung des angesprochenen herkömmlichen Datenadministrationsvorgangs.

Das erste Telekommunikationsnetz 1 verwendet das Internet-Protokoll (im Folgenden kurz mit "IP-Protokoll" bezeichnet) und umfasst einen ersten Layer-2-Switch 2, der mit einer ersten Verwaltungs-Informations-Basiseinheit MIB verbunden ist. Vier erste IP-Endgeräte in Gestalt zweier IP-Telefone T1, T2 sowie zweier IP-Rechnerstationen R1, R2 sind über je eine LAN-Leitungsverbindung L1, L2, L3, L4 an den ersten Layer-2-Switch 2 angeschlossen. Zur Bereitstellung von standortabhängigen Diensten ist im ersten Telekommunikationsnetz 1 das LLDP-MED-Protokoll implementiert.

Zur Durchführung des zuvor genannten Datenadministrationsvorgangs wird ein auf einem Datenadministrationsrechner 4 laufendes Administrationsprogramm verwendet. Unter Kontrolle des Administrationsprogrammes werden erste Ortsinformationen, die den Standort der einzelnen ersten IP-Endgeräte R1, R2, T1, T2 betreffen, vom Datenadministrationsrechner 4 in die erste Verwaltungs-Informations-Basiseinheit MIB eingegeben und in letzterer gespeichert.

Im Zuge der Installation der einzelnen Netzkomponenten zum fertig installierten ersten Telekommunikationsnetz 1 teilen die einzelnen ersten IP-Endgeräte R1, R2, T1, T2 bei deren Anschließen an den ersten Layer-2-Switch 2 letzterem jeweils ihre Fähigkeiten mit und erhalten ihrerseits die ihnen jeweils zugeordneten ersten Ortsinformationen vom ersten Layer-2-Switch 2 .

Die oben beschriebene bekannte Lösung des Datenadministrationsvorgangs ist aufgrund des erforderlichen Einsatzes eines verhältnismäßig aufwendigen und kostspieligen Datenadministrationsprogrammes als nachteilig anzusehen.

In "TIA Standard - IP Telephony Infrastructure - Link Layer Discovery Protocol for Media Endpoint Devices", XP002630947 wird ein Verfahren zum Verwalten von Daten in einem Kommunikationsnetz mit einem Switch und einem mit dem Switch verbundenen dezentralen Kommunikationsendgerät beschrieben. Es wird ein standortabhängiger Dienst gemäß einem Discovery Protokoll verwendet.

Es ist daher die Aufgabe der vorliegenden Erfindung, den Aufwand für den Datenadministrationsvorgang im Vergleich zum Stand der Technik zu verringern und so den Datenadministrationsvorgang wirtschaftlicher zu gestalten.

Diese Aufgabe wird erfindungsgemäß durch die Merkmale des Anspruchs 1 gelöst. Spezielle Ausgestaltungen des erfindungsgemäßen Verfahrens sind in den Unteransprüchen definiert.

Das Verfahren dient zum Verwalten von Daten in einem Kommunikationsnetz. Letzeres umfasst eine Anschlusseinrichtung, insbesondere einen Switch, und wenigstens ein mit der Anschlusseinrichtung verbundenes dezentrales Kommunikationsendgerät. Die Anschlusseinrichtung ist mit einer Verwaltungs-Informations-Basiseinheit verbunden oder versehen, in die im Rahmen eines Datenadministrationsvorgangs Ortsinformationen, die den Standort des

Kommunikationsendgerätes betreffen, eingeschrieben und zur Verwendung in einem (oder für einen) standortabhängigen Dienst vorgehalten werden. Dabei ist der standortabhängige Dienst gemäß einem Discovery-Protokoll gestaltet. Der Datenadministrationsvorgang umfasst das Einspeisen der Ortsinformationen in das Kommunikationsnetz durch eine Ortsinformationenquelle. Der Datenadministrationsvorgang umfasst ferner die Übertragung der von der Ortsinformationenquelle in das Kommunikationsnetz eingespeisten Ortsinformationen von der Ortsinformationenquelle zur Anschlusseinrichtung. Die Übertragung der angesprochenen eingespeisten Ortsinformationen erfolgt über wenigstens einen Teilabschnitt der Übertragungsstrecke nach dem Discovery-Protokoll. Discovery-Protokolle sind in verschiedenen Formen aus der Praxis bekannt und werden von vielen, für den Betrieb eines Netzwerks erforderlichen Netzinfrastrukturgeräten (wie z.B. Switche oder Router) unterstützt, um beispielsweise über das Discovery-Protokoll Informationen über die eigene Konfiguration an den eigenen Netzwerkschnittstellen zu versenden. Unter dem Begriff "Ortsinformationenquelle" ist im Wortlaut dieses Textes jede Einrichtung zu verstehen, die fähig ist, Ortsinformationen in das Kommunikationsnetz einzuspeisen.

Beim erfindungsgemäßen Verfahrens basiert das Discovery-Protokoll auf dem IEEE 802.1AB-Standard oder ist vom IEEE 802.1AB-Standard abgeleitet.

Beim erfindungsgemäßen Verfahrens ist der standortabhängige Dienst nach dem LLDP-MED-Protokoll oder dessen Derivate gestaltet.

Gemäß des erfindungsgemäßen Verfahrens wird eine Messvorrichtung, die bei einer ohnehin nach dem Installieren des Kommunikationsendgerätes durchzuführenden routinemäßigen Prüfung insbesondere der Funktion und/oder der Dienstgüte der Verbindung zwischen einem dem Kommunikationsendgeräte zugeordneten IP-Anschluss und der Anschlusseinrichtung eingesetzt wird, als Ortsinformationenquelle mitverwendet. Dies hat die Vorteile, dass zum einen kein weiterer gerätetechnischer Aufwand für die Durchführung der Datenadministrationsvorgang und nur ein geringer Softwareaufwand zur entsprechenden Auslegung der Messvorrichtung erforderlich ist. Zum anderen wird der zusätzliche Arbeitsaufwand durch die kombinierte Durchführung von Prüfung der Verbindung einerseits und Datenadministration andererseits denkbar gering gehalten.

### Kurzbeschreibung der beigefügten Zeichnungen:

**Fig.1** zeigt ein schematisches Systemschaubild des prinzipiellen Aufbaus eines ersten Kommunikationsnetzes zur Veranschaulichung der Durchführung eines herkömmlichen Datenadministrationsvorgangs; und
**Fig. 2** zeigt ein schematisches Systemschaubild des prinzipiellen Aufbaus eines zweiten Telekommunikationsnetzes in einem Ausgangszustand zur Veranschaulichung der Durchführung des erfindungsgemäßen Verfahrens.

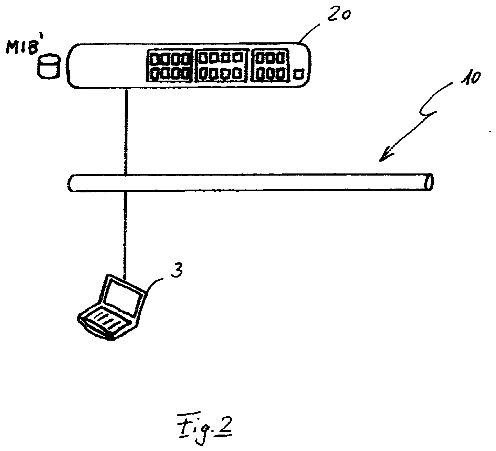

Im Nachfolgenden wird ein Ausführungsbeispiel der Erfindung unter Bezugnahme auf **Fig. 2** noch etwas näher beschrieben, die ein zweites Telekommunikationsnetz 10 in einem Ausgangszustand, also vor dem Anschließen mehrerer (nicht dargestellter) zweiter IP-Endgeräte an einen zweiten Layer-2-Switch 20 zeigt.

Das zweite Telekommunikationsnetz 10, das zum Beispiel als Leitungsverbindungsnetz (in der englischen Literatur mit "*wired network*" bezeichnet) ausgeführt ist, verwendet ebenfalls das Internet-Protokoll und umfasst eine mit dem zweiten Layer-2-Switch 2 verbundene zweite Verwaltungs-Informations-Basiseinheit MIB'. Die einzelnen, mit dem zweiten Layer-2-Switch 20 zu verbindenden zweiten IP- Endgeräte sind in verschiedenen Räumlichkeiten innerhalb eines Gebäudekomplexes anzuordnen.

Im zweiten Telekommunikationsnetz 10 ist wenigstens ein standortabhängiger Dienst, wie etwa ein ECS-Notrufdienst verfügbar, der gemäß dem LLDP-MED-Protokoll gestaltet ist.

Wiederum ist es erforderlich im Rahmen eines Datenadministrationsvorgangs zweite Ortsinformationen, die den Standort der einzelnen zweiten IP-Endgeräte innerhalb des Gebäudekomplexes eindeutig identifizieren, in die LLDP-MED-konforme zweite Verwaltungs-Informations-Basiseinheit MIB' einzuschreiben und darin vorzuhalten, bis die zweiten Ortsinformationen im Bedarfsfall von der zweiten Verwaltungs-Informations-Basiseinheit MIB' abgerufen werden.

Während eines definierten Stadiums der Installation des zweiten Telekommunikationsnetzes 10 wird mittels eines Messgerätes 3 eine ohnehin durchzuführende Prüfung der Funktion und der Dienstgüte der Verbindung zwischen dem zweiten Layer-2-Switch 20 und einem IP-Anschluss in Form einer (nicht dargestellten) Anschlussdose durchgeführt, die einem zweiten IP-Endgerät zugeordnet ist.

Das Messgerät 3 wird mitverwendet, um die Standortinformationen des jeweiligen zweiten IP-Endgerätes in das zweite Telekommunikationsnetzes 10 einzuspeisen. Diese vom Messgerät 3 eingespeisten Standortinformationen werden über das hierfür erweiterte LLDP-MED-Protokoll zum zweiten Layer-2-Switch 20 übertragen.

Beispielsweise erfolgt auch die Eingabe der so übertragenen Standortinformationen in die zweite Verwaltungs-Informations-Basiseinheit MIB 'und/oder das Speichern der so übertragenen Standortinformationen in der zweiten Verwaltungs-Informations-Basiseinheit MIB' gemäß dem zuvor genannten erweiterten LLDP-MED-Protokoll.

Die Standortinformationen zu einem in einem bestimmten Raum des Gebäudekomplexes angeordneten zweiten IP-Endgerät werden beispielsweise in einem Format angegeben, das die Nummer des Gebäudekomplexes, die Nummer der Etage auf der sich der bestimmte Raum befindet und die Nummer des bestimmten Raumes beinhaltet. Beispiel: Gebäude-Nr. 7205, 4. Etage, Raum 443.

### Bezugszeichen

- 1: erstes Telekommunikationsnetz
- 2: erster Layer-2-Switch
- 3: Ortsinformationenquelle; Messgerät
- 4: Datenadministrationsrechner
- 5: Datenbank
- 10: zweites Telekommunikationsnetz
- 20: zweiter Layer-2-Switch
- L1, L2, L3, L4: LAN-Leitungsverbindungen
- MIB: erste Verwaltungs-Informations-Basiseinheit
- MIB': zweite Verwaltungs-Informations-Basiseinheit
- R1, R2: Rechnerstationen
- T1, T2: IP-Telefone

## Patentansprüche

1. Verfahren zum Verwalten von Daten in einem Kommunikationsnetz (10) mit einer Anschlusseinrichtung (20), und wenigstens einem mit der Anschlusseinrichtung (20) verbundenen dezentralen Kommunikationsendgerät (T1, T2, R1, R2), wobei die Anschlusseinrichtung (20) mit einer Verwaltungs-Informations-Basiseinheit (MIB') verbunden oder versehen ist, in die im Rahmen eines Datenadministrationsvorgangs den Standort des Kommunikationsendgerätes (T1, T2, R1, R2) betreffende Ortsinformationen eingeschrieben und zur Verwendung in einem standortabhängigen Dienst vorgehalten werden, wobei der standortabhängige Dienst gemäß einem Discovery-Protokoll gestaltet ist, wobei das Discovery-Protokoll auf dem IEEE 802.1AB-Standard basiert, wobei der standortabhängige Dienst nach dem LLDP-MED-Protokoll oder dessen Derivaten gestaltet ist, wobei die Anschlusseinrichtung (20) ein Layer-2-Switch ist, und wobei der Datenadministrationsvorgang umfasst:
- Installieren von wenigstens einem Kommunikationsendgerät (T1, T2, R1, R2) und Prüfen, mittels eines Messgeräts (3), einer Funktion und/oder Dienstgüte einer Verbindung zwischen einem dem wenigstens einem Kommunikationsendgerät (T1, T2, R1, R2) zugeordneten IP-Anschluss und dem Layer-2-Switch (20),
- Verwenden des Messgeräts (3), um Standortinformationen des wenigstens einen Kommunikationsendgeräts (T1, T2, R1, R2) in das Kommunikationsnetz (10) einzuspeisen, wobei die von dem Messgerät (3) eingespeisten Standortinformationen über das LLDP-MED-Protokoll zu dem Layer-2-Switch (20) übertragen werden.

2. Verfahren nach Anspruch 1, **dadurch gekennzeichnet, dass** das Messgerät (3) Standortinformationen zu einem Raum eines Gebäudekomplexes angibt, in dem sich das Kommunikationsendgerät (T1, T2, R1, R2) befindet.

3. Verfahren nach Anspruch 2, **dadurch gekennzeichnet, dass** die Standortinformationen in einem Format angegeben werden, das die Nummer des Gebäudekomplexes, die Nummer der Etage auf der sich der Raum befindet und die Nummer des Raumes beinhaltet.

## Claims

1. A method for managing data in a communication network (10) that comprises a connection device (20) and at least one decentralized communication terminal (T1, T2, R1, R2) connected to the connection device (20), wherein the connection device (20) is connected to or provided with a management information base unit (MIB'), into which, as part of a data administration process, location information relating to the location of the communication terminal (T1, T2, R1, R2) is written and in which said information is kept available for use in a location-dependent service, wherein the location-dependent service is configured in accordance with a discovery protocol, wherein the discovery protocol is based on the IEEE 802.1 AB standard, wherein the location-dependent service is configured in accordance with the LLDP-MED protocol or derivations thereof,
wherein the connection device (20) is a layer-2 switch, and wherein the data administration process comprises:
- installing at least one communication terminal (T1, T2, R1, R2) and testing, by means of a measurement device (3), a function and/or service quality of a connection between an IP link assigned to the at least one communication terminal (T1, T2, R1, R2) and the layer-2 switch (20),
- using the measurement device (3) to store location information of the at least one communication terminal (T1, T2, R1, R2) in the communication network (10), wherein the location information stored by the measurement device (3) is transmitted via the LLDP-MED protocol to the layer-2 switch (20).

2. The method according to claim 1, **characterized in that** the measurement device (3) provides location information regarding a room in a building complex in which the communication terminal (T1, T2, R1, R2) is located.

3. The method according to claim 2, **characterized in that** the location information is provided in a format that includes the number of the building complex, the number of the floor on which the room is located, and the room number of the room.

## Revendications

1. Procédé pour gérer des données dans un réseau de communication (10) avec un dispositif de connexion (20), et au moins un terminal de communication (T1, T2, R1, R2) décentralisé relié au dispositif de connexion (20), dans lequel le dispositif de connexion (20) est relié à ou doté d'une unité de base d'informations de gestion (MIB'), dans laquelle dans le cadre d'une opération d'administration de données, des informations locales concernant l'emplacement du terminal de communication (T1, T2, R1, R2) sont inscrites et mises à disposition pour l'utilisation dans un service dépendant de l'emplacement, dans lequel le service dépendant de l'emplacement est conçu selon un protocole Discovery, dans lequel le protocole Discovery se base sur le standard IEEE 802.1AB, dans lequel le service dépendant de l'emplacement est conçu selon le protocole LLDP-MED ou ses dérivés,
dans lequel le dispositif de connexion (20) est un Layer-2-Switch, et dans lequel l'opération d'administration de données comprend :
- l'installation d'au moins un terminal de communication (T1, T2, R1, R2) et le contrôle, au moyen d'un appareil de mesure (3), d'une fonction et/ou qualité de service d'une liaison entre une connexion IP associée à l'au moins un terminal de communication (T1, T2, R1, R2) et le Layer-2-Switch (20),
- l'utilisation de l'appareil de mesure (3) pour alimenter des informations d'emplacement de l'au moins un terminal de communication (T1, T2, R1, R2) dans le réseau de communication (10), dans lequel les informations d'emplacement alimentées par l'appareil de mesure (3) sont transmises par le biais du protocole LLDP-MED au Layer-2-Switch (20).

2. Procédé selon la revendication 1, **caractérisé en ce que** l'appareil de mesure (3) indique des informations d'emplacement sur un espace d'un complexe immobilier, dans lequel se trouve le terminal de communication (T1, T2, R1, R2).

3. Procédé selon la revendication 2, **caractérisé en ce que** les informations d'emplacement sont indiquées dans un format qui contient le numéro du complexe immobilier, le numéro de l'étage sur lequel se trouve l'espace et le numéro de l'espace.
